(19) Europäisches Patentamt
European Patent Office
Office européen des brevets

(11) **EP 2 050 200 B1**

(12) **EUROPEAN PATENT SPECIFICATION**

(45) Date of publication and mention of the grant of the patent:
**28.11.2018 Bulletin 2018/48**

(21) Application number: **07812776.8**

(22) Date of filing: **11.07.2007**

(51) Int Cl.:
**H04W 52/24** *(2009.01)*    **H04W 52/36** *(2009.01)*
**H04W 52/52** *(2009.01)*    **H04W 72/08** *(2009.01)*

(86) International application number:
**PCT/US2007/073204**

(87) International publication number:
**WO 2008/014118 (31.01.2008 Gazette 2008/05)**

(54) **SPECTRUM EMISSION LEVEL VARIATION IN A SCHEDULABLE WIRELESS COMMUNICATION TERMINAL**

EMISSIONSSTUFENVARIATION EINES SPEKTRUMS BEI EINEM PLANBAREN DRAHTLOSEN KOMMUNIKATIONSGERÄT

VARIATION DE NIVEAU D'ÉMISSION DE SPECTRE DANS UN TEMINAL DE COMMUNICATION SANS FIL ORDONNANÇABLE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **25.07.2006 US 459863**

(43) Date of publication of application:
**22.04.2009 Bulletin 2009/17**

(73) Proprietor: **Google Technology Holdings LLC**
**Mountain View, CA 94043 (US)**

(72) Inventors:
- **LOVE, Robert T.**
  **Barrington, Illinois 60010 (US)**
- **KLOMSDORF, Armin W.**
  **Libertyville, Illinois 60048 (US)**
- **SCHWENT, Dale G.**
  **Schaumburg, Illinois 60195 (US)**
- **STEWART, Kenneth A.**
  **Grayslake, Illinois 60030 (US)**
- **WILSON, David R.**
  **Hainsville, Illinois 60030 (US)**

(74) Representative: **Boult Wade Tennant LLP**
**Verulam Gardens**
**70 Gray's Inn Road**
**London WC1X 8BT (GB)**

(56) References cited:
| | |
|---|---|
| EP-A- 1 271 769 | WO-A-03/088520 |
| WO-A-2005/018114 | WO-A-2007/087482 |
| WO-A-2007/087483 | US-A1- 2004 109 424 |
| US-A1- 2004 212 428 | US-B1- 6 751 444 |

- **"Universal Mobile Telecommunications System (UMTS); FDD enhanced uplink; Overall description; Stage 2 (3GPP TS 25.309 version 6.6.0 Release 6); ETSI TS 125 309" ETSI STANDARDS, EUROPEAN TELECOMMUNICATIONS STANDARDS INSTITUTE, SOPHIA-ANTIPO, FR, vol. 3-R2, no. V660, March 2006 (2006-03), XP014034283 ISSN: 0000-0001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE DISCLOSURE

The present disclosure relates generally to wireless communications, and more particularly to spectrum emission level variation in schedulable wireless communication terminals, and corresponding methods.

BACKGROUND

Some effort is being expended during the specification phase of contemporary broadband wireless communication standards such as the 3GPP Long Term Evolution (LTE) project, also referred to as Evolved UMTS Terrestrial Radio Access or E-UTRA, to improve the performance and efficiency of the power amplifier (PA) in mobile terminals or user equipment (UE). Toward this objective, there are a number of key performance metrics, but the over-riding goal is to minimize the PA power consumption (or peak and/or mean current drain), cost and the complexity required to deliver a given specified conducted power level, for example, +21dBm or +24dBm, to the UE antenna.

Generally, the required conducted power level must be achieved within a specified lower bound on in-band signal quality, or error vector magnitude (EVM) of the desired waveform, and an upper bound of signal power leakage out of the desired signal bandwidth and into the receive signal band of adjacent or alternate carrier Node B receivers or the signal band of adjacent or alternate carrier UE transmitters. These effects may be subsumed into the broader term "waveform quality".

These problems represent classical PA design challenges, but emerging broadband wireless networks such as 3GPP LTE must solve these problems in the context of new modes of system operation. For example, power amplifier (PA) operation must be optimized while transmitting new waveform types, including multi-tone waveforms and frequency-agile waveforms occupying variable signal bandwidths (within a nominal bandwidth, sometimes referred to as a channel or carrier bandwidth). Further, PA performance must now be optimized in a predominantly packet switched (PS) network where a network entity, such as a base station, schedules multiple wireless communication entities or terminals to transmit simultaneously. PA performance also must be optimized in the presence of numerous different frequency or spatially adjacent radio technologies, including GSM, UMTS, WCDMA, unlicensed transmitter and receivers, among other radio technologies.

PCT patent application publication no. WO 2005/018114 describes a method of uplink transmission scheduling for a network including at least one radio network controller (RNC), at least one user equipment (UE), and a plurality of Node Bs, with the steps of determining a parameter to be used in uplink transmission scheduling by considering uplink noise rise of the plurality of Node Bs, and performing the uplink transmission scheduling in accordance with the determined parameter. By determining the parameter upon considering the effects of the transmit power or transmit rate for a particular UE in soft handover with a scheduling Node B on the uplink noise rise of other neighboring Node Bs that are in soft handover but not scheduled with that particular UE, uplink transmission scheduling performance degradation can be prevented and more effective control of uplink noise rise at each Node B is possible.

US patent application publication on. US 2004/109424 describes a wireless communication network able to perform fast reverse link scheduling by providing data to a user terminal to enable it to select parameters that a base station is to use when scheduling a reverse link transmission. The user terminal that is in hand-off and is communicating with a plurality of base stations selects among the received network measured parameters from a plurality of base station transceiver sets to prompt each base station transceiver set to utilize a set of network parameters that will not likely cause excessive interference or drop offs in any of the cells supported by the base station transceiver set with which the user terminal is communicating.

US patent no. US6,751,444 describes an apparatus and process for allocating carriers in a multi-carrier system. In one embodiment, the process comprises determining a location of a subscriber with respect to a base station, selecting carriers from a band of carriers to allocate to the subscriber according to the location of the subscriber with respect to the base station, and allocating selected carriers to the subscriber.

A 3GPP specification TS25.309 version 6.6.0 Release 6 entitled '3rd Generation Partnership Project; Technical Specification Group Radio Access Network; FDD Enhanced Uplink; Overall description; Stage 2 (Release 6)' is a technical specification of the overall support of FDD Enhanced Uplink in UTRA and includes a section on Node B controlled scheduling

SUMMARY

In accordance with aspects of the invention, there are provided a method in a schedulable wireless communication entity and a wireless communication entity, as recited in the accompanying claims.

The various aspects, features and advantages of the disclosure will become more fully apparent to those having ordinary skill in the art upon careful consideration of the following Detailed Description thereof with the accompanying drawings described below. The drawings may have been simplified for clarity and are not necessarily drawn to scale.

BRIEF DESCRIPTION OF THE DRAWINGS

FIG. 1 illustrates an exemplary wireless communication system.

FIG. 2 illustrates a wireless communication entity.

FIG. 3 illustrates neighboring communication networks.

FIG. 4 illustrates occupied bandwidth power de-rating values.

FIG. 5 illustrates a radio resource assignment to multiple entities.

FIG. 6 illustrates a power amplifier under control of a controller modifying the maximum power level.

FIG. 7 illustrates a received signal at a wireless communications receiver, conditioned on the maximum power of a wireless transmitter power amplifier.

DETAILED DESCRIPTION

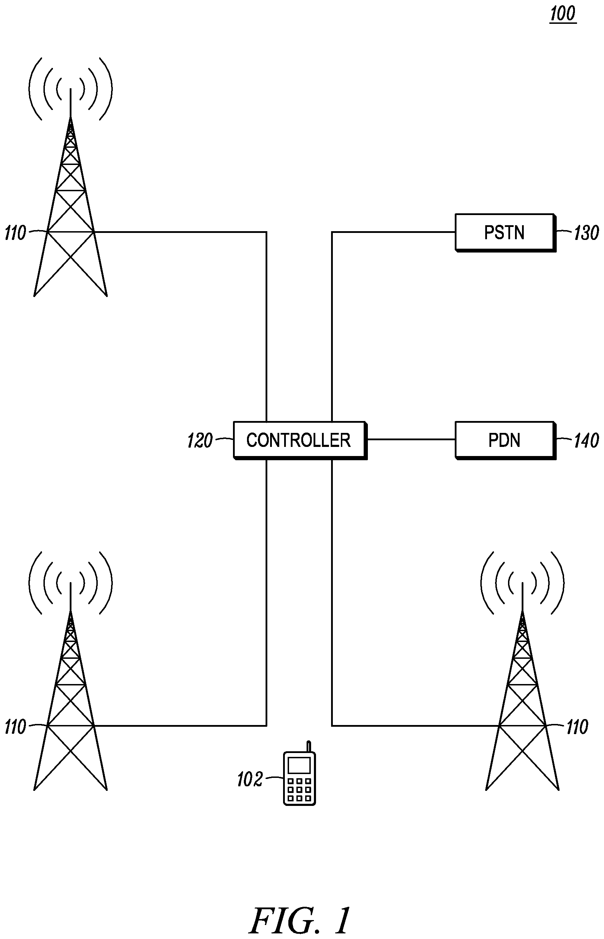

In FIG. 1, the exemplary wireless communication system comprises a cellular network including multiple cell serving base stations 110 distributed over a geographical region. The cell serving base station (BS) or base station transceiver 110 is also commonly referred to as a Node B or cell site wherein each cell site consists of one or more cells, which may also be referred to as sectors. The base stations are communicably interconnected by a controller 120 that is typically coupled via gateways to a public switched telephone network (PSTN) 130 and to a packet data network (PDN) 140. The base stations additionally communicate with mobile terminals 102 also commonly referred to as User Equipment (UE) or wireless terminals to perform functions such as scheduling the mobile terminals to receive or transmit data using available radio resources. The network also comprises management functionality including data routing, admission control, subscriber billing, terminal authentication, etc., which may be controlled by other network entities, as is known generally by those having ordinary skill in the art.

Exemplary cellular communication networks include 2.5 Generation 3GPP GSM networks, 3rd Generation 3GPP WCDMA networks, and 3GPP2 CDMA communication networks, among other existing and future generation cellular communication networks. Future generation networks include the developing Universal Mobile Telecommunications System (UMTS) networks, Evolved Universal Terrestrial Radio Access (E-UTRA) networks. The network may also be of a type that implements frequency-domain oriented multi-carrier transmission techniques, such as Frequency Division Multiple Access (OFDM), DFT-Spread-OFDM, IFDMA, etc., which are of interest for future systems. Single-carrier based approaches with orthogonal frequency division (SC-FDMA), particularly Interleaved Frequency Division Multiple Access (IFDMA) and its frequency-domain related variant known as DFT-Spread-OFDM (DFT-SOFDM), are attractive in that they optimise performance when assessed using contemporary waveform quality metrics, which may include peak-to-average power ratio (PAPR) or the so-called cubic metric (CM). These metrics are good indicators of power backoff or power de-rating necessary to maintain linear power amplifier operation, where 'linear' generally means a specified and controllable level of distortion both within the signal bandwidth generally occupied by the desired waveform and in neighboring frequencies.

In OFDM networks, both Time Division Multiplexing (TDM) and Frequency Division Multiplexing (FDM) are employed to map channel-coded, interleaved and data-modulated information onto OFDM time/frequency symbols. The OFDM symbols can be organized into a number of resource blocks consisting of M consecutive sub-carriers for a number N consecutive OFDM symbols where each symbol may also include a guard interval or cyclic prefix. An OFDM air interface is typically designed to support carriers of different bandwidths, e.g., 5 MHz, 10 MHz, etc. The resource block size in the frequency dimension and the number of available resource blocks are generally dependent on the bandwidth of the system.

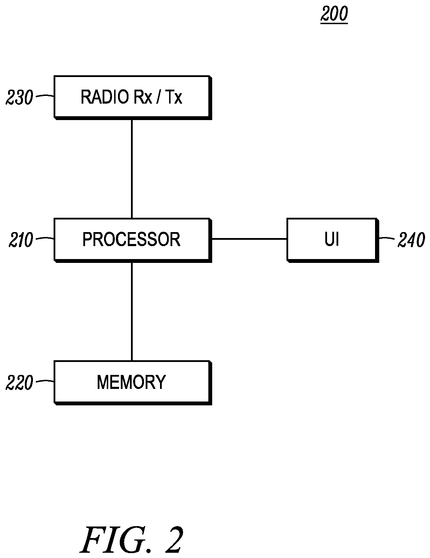

In FIG. 2, the exemplary wireless terminal 200 comprises a processor 210 communicably coupled to memory 220, for example, RAM, ROM, etc. A wireless radio transceiver 230 communicates over a wireless interface with the base stations of the network discussed above. The terminal also includes a user interface (UI) 240 including a display, microphone and audio output among other inputs and outputs. The processor may be implemented as a digital controller and/or a digital signal processor under control of executable programs stored in memory as is known generally by those having ordinary skill in the art. Wireless terminals, which are referred to as User Equipment (UE) in WCDMA networks, are also referred to herein as schedulable wireless communication entities, as discussed more fully below.

User equipment operating in a cellular network operate in a number of 'call states' or 'protocol states' generally conditioned on actions applicable in each state. For example, in a mode typically referred to as an 'idle' mode, UE's may roam throughout a network without necessarily initiating or soliciting uplink or downlink traffic, except, e.g., to periodically perform a location update to permit efficient network paging. In another such protocol state, the UE may be capable of initiating network access via a specified shared channel, such as a random access channel. A UE's ability or need to access physical layer resources may be conditioned on the protocol state. In some networks, for example, the UE may be permitted access to a shared control channel only under certain protocol-related conditions, e.g., during initial network entry. Alternatively, a UE may have a requirement to communicate time-critical traffic, such as a handover request or acknowledgement message, with higher reliability. In such protocol states, the UE may be permitted, either explicitly by the network, by design, or by a controlling specification, such as a 3GPP specification, to adjust its maximum power level depending on its protocol state.

Generally, a wireless communication network infrastructure scheduling entity located, for example, in a base station 110 in FIG. 1, allocates or assigns radio resources to schedulable wireless communication entities, e.g., mobile terminals, in the wireless communication network. In FIG. 1, the base stations 110 each include a scheduler for scheduling and allocating resources to mobile terminals in corresponding cellular areas. In multiple access schemes such as those based on OFDM methods, multi-carrier access or multi-channel CDMA wireless communication protocols including, for example, IEEE-802.16e-2005, multi-carrier HRPD-A in 3GPP2, and the long term evolution of UTRA/UTRAN Study Item in 3GPP (also known as evolved UTRA/UTRAN (EUTRA/EUTRAN)), scheduling may be performed in the time and frequency dimensions using a Frequency Selective (FS) scheduler. To enable FS scheduling by the base station scheduler, in some embodiments, each mobile terminal provides a per frequency band channel quality indicator (CQI) to the scheduler.

In OFDM systems, a resource allocation is the frequency and time allocation that maps information for a particular UE to resource blocks as determined by the scheduler. This allocation depends, for example, on the frequency-selective channel-quality indication (CQI) reported by the UE to the scheduler. The channel-coding rate and the modulation scheme, which may be different for different resource blocks, are also determined by the scheduler and may also depend on the reported CQI. A UE may not be assigned every sub-carrier in a resource block. It could be assigned every Qth sub-carrier of a resource block, for example, to improve frequency diversity. Thus a resource assignment can be a resource block or a fraction thereof. More generally, a resource assignment is a fraction of multiple resource blocks. Multiplexing of lower-layer control signaling may be based on time, frequency and/or code multiplexing.

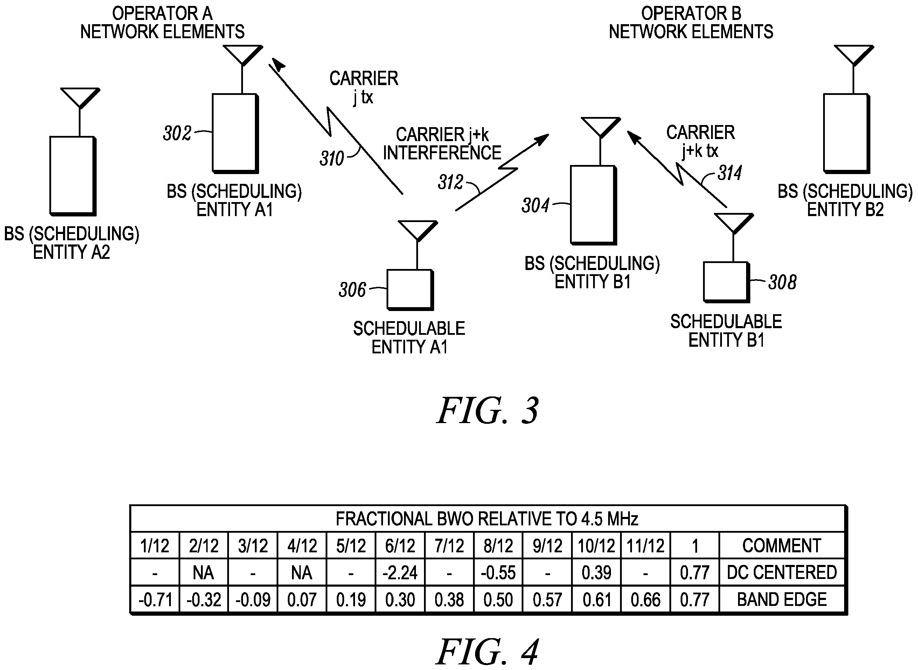

The interference impact of a network entity, for example, a schedulable wireless communication terminal, to an uncoordinated adjacent band entity, referred to as the victim, is shown in FIG 3. Victim entities may be base stations or mobile terminals in immediately adjacent bands or in non-contiguous adjacent bands, all of which are generally referred to as neighboring bands. The victim receiver may operate on or belong to the same or different technology as the network entity producing the interference. The victim receiver may also operate on or belong to the same or different network types managed either by the same (coordinated) operator or by a different (uncoordinated) operator. The victim receiver may also operate on belong to a different technology network where there is no coordination between networks to reduce interference.

Regional or international spectrum regulatory authorities frequently designate contiguous segments of radio frequency spectrum, or radio bands for use by specific duplexing modes, for example, frequency division duplexing (FDD) or time-division duplexing (TDD) or by specific wireless technologies, such as Group Special Mobile (GSM), Code Division Multiple Access (CDMA), Wideband CDMA, etc. For example, GSM networks are frequently granted access to the so-called GSM 900MHz (or Primary GSM) band specified as the frequency-duplex pair of band between the frequencies 890-915MHz and 935-960MHz. This information may be stored in the UE or transmitted by the network controlling a UE in order to permit an optimum choice of PA output power back-off (also referred to as a power de-rating) or more generally to optimally adjust the maximum power level of the PA conditioned on adjacent channel interference offered to, and consistent with, the known adjacent channel technologies.

More generally, a frequency band adjacent to such a UE may be known from national or international regulations or from general deployment criteria, such as 'licensed' or 'unlicensed' designations to be subject to specific maximum levels of interference from the band in which the UE is operating. When this information is stored in the UE or made available by signaling from the network, the UE may optimize its radiated power level subject to the known adjacent band interference limits.

In FIG. 3, a schedulable entity A1 306 is scheduled aperiodically. Particularly, the entity A1 is allocated radio resources including bandwidth on carrier j 310 as well as bandwidth location in the carrier j band. The entity A1 is also allocated its transmission power assignment or power adjustment and a scheduling grant by the base station scheduling entity A1 302, which is part of network A. Schedulable entity A1 306 transmits using its assigned bandwidth on carrier j 310 when scheduled by BS scheduling entity A1 302 and creates out of band emissions which impinge upon other carriers including an adjacent carrier j+k and is seen as interference 312 by BS scheduling entity B1 304, which is the victim receiver or entity, resulting in reduced SNR when receiving a scheduled transmission from schedulable entity B1 308 on carrier j+k 314. Since base station entity B1 304 is part of Network B and there is no coordination, or sub-optimal coordination, between Network A and Network B then it may not be possible for scheduling entities like 306 and 308 to avoid mutual interference.

In FIG. 3, the degree to which schedulable entity A1 306 interferes with schedulable entity B1 308 on carrier j+k 314 is dependent on the radio frequency (RF) distance (also referred to as path loss) between the schedulable wireless communication entity and the other wireless communications (victim) entity. The interference is also dependent on the effective radiated power level of the transmitter, the size and amount of separation of the bandwidth allocations between entities and the amount of overlap in time. Out of band emissions of one transmitter will have smaller impact on another receiver if the path loss between the transmitter and victim receiver is larger, and the impact will be larger if the path loss is smaller. Adjacent channel interference is also present in TDD systems where both the BS 302 and schedulable entity 306 of Network A transmit on the same carrier 310 and both BS 304 and schedulable entity 308 of Network B transmit on the same carrier 314 and hence both BS 302 and schedulable entity 306 cause out of band emissions and hence interference 312 to adjacent carrier 314.

In one embodiment, the radio resource allocated to a schedulable wireless communication entity is based on an interference impact of the schedulable wireless communication entity operating on the radio resource allocated. The interference impact may be based on any one or more of the following factors: a transmission waveform type of the schedulable wireless communication entity; a maximum allowed and current power level of the schedulable wireless communication entity; bandwidth assignable to the schedulable wireless communication entity; location of the assignable bandwidth in a carrier band; radio frequency distance (path loss) relative to another wireless communications entity; variation in the maximum transmit power of the schedulable wireless communication entity for the assigned bandwidth; separation of assigned band relative to the other wireless communication entity; reception bandwidth of the victim entity, minimum SNR required for operation of the victim entity; and reception multiple access processing (e.g. CDMA, OFDM, or TDMA), among other factors. The variation in the maximum transmit power includes de-rating or re-rating the maximum transmit power of the wireless communication entity as discussed further below.

For a given carrier band and band separation, transmissions with larger occupied bandwidth (OBW) create more out of band emissions resulting in a larger adjacent or neighbor channel leakage ratio (ACLR) than transmissions with smaller OBW. The increase in out of band emissions from transmissions with larger OBW is due largely to increased adjacent channel occupancy by 3rd and 5th order intermodulation (IM) products. The 3rd order IM product largely determines ACLR in adjacent bands. The 5th order IM product plateau largely determines ACLR in more distant (non-contiguous adjacent) bands. Note, however that in networks such as IEEE 802.16e-2005 and 3GPP LTE networks which support multiple bandwidth types, the dimensions in frequency of the adjacent band would also control such relationships. To avoid the relative increase in ACLR due to larger OBW, it is generally necessary to reduce or de-rate transmission power created by the interfering entity in proportion (although not necessarily linearly so) to the increase in OBW. Given a reference OBW (OBW$_{REF}$) with a known (e.g. 0) power de-rating (PD$_{REF}$) needed to meet a specified ACLR, an occupied bandwidth power de-rating (OBPD) can be defined for an arbitrary OBW relative to the reference OBW. The OBPD can be obtained empirically but may also be approximated mathematically by an equation such as:

$$OBPD \propto 10 \cdot \log_{10}(OBW / OBW_{ref}) \qquad (1)$$

Generally, the transmission power of the mobile terminal must be reduced by OBPD to keep adjacent channel power leakage and therefore ACLR the same for a transmission with a larger OBW compared to one with a smaller reference OBW. The total power de-rating (TPD) needed to account for both an occupied bandwidth power de-rating (OBPD) and a waveform power de-rating (WPD) in order to meet a given ACLR requirement can be represented by:

$$TPD = f(OBPD, WPD) \qquad (2)$$

Note that the function f(.) may, for example, be the simple summation of OBPD and WPD. The WPD accounts for waveform attributes such as modulation and number of frequency or code channels and can be determined empirically through power amplifier measurements or indicated by a waveform metric such as the Cubic Metric (CM). The additional power de-rating from OBPD (beyond WPD alone) generally means worse cell edge coverage for wireless terminals unless mitigated. For example, a transmission with 4.5 MHz occupied bandwidth on a 5 MHz E-UTRA carrier with a fixed 5 MHz carrier separation will have a larger measured ACLR (e.g., approximately -30 dBc instead of -33 dBc) with regard to the adjacent 5 MHz carrier than a transmission with only 3.84 MHz occupied bandwidth. To reduce the ACLR back to -33 dBc requires an OBPD of approximately 0.77 dB (based on empirical measurements) which is close to the 0.70 dB given equation (1) above based on OBW of 4.5 MHz and $OBW_{REF}$ = 3.84 MHz.

The cubic metric (CM) characterizes the effects of the 3rd order (cubic) non-linearity of a power amplifier on a waveform of interest relative to a reference waveform in terms of the power de-rating needed to achieve the same ACLR as that achieved by the reference waveform at the PA rated power. For example, a UE with power class of 24 dBm can nominally support a rated maximum power level (PMAX) of 24 dBm. In practice, the UE's current, or instantaneous, or local maximum power level is limited to the operational maximum power level given by PMAX - f(OBPD ,WPD) where f(.) can, for example, be the simple summation of OBPD and WPD such that the operational maximum power level is PMAX - (OBPD + WPD). The difference between PMAX and the UE's current power level after power control or after assignment of an arbitrary power level less than PMAX is called the UE's power margin or power headroom. Scheduling can be used to reduce or avoid OBPD.

In one embodiment, the scheduler allocates the radio resource based on the interference impact by assigning bandwidth based on power headroom of the schedulable wireless communication entity. Particularly, the scheduler finds a bandwidth size that reduces OBPD enough such that operational maximum power (PMAX-OBPD-WPD) does not limit current power of the schedulable wireless communication entity.

A scheduler may control leakage into adjacent and non-contiguous adjacent bands by scheduling mobile terminals that are "close" to the serving cell in terms of path loss with bandwidth allocations that occupy the entire carrier band or a bandwidth allocation that includes resource blocks (RB's) that are at the edge of the carrier band (e.g., 5 MHz UTRA or LTE carrier) since due to power control it is very unlikely that such a terminal will be operating at or near to PMAX and therefore unlikely that its current power level would be limited by the operational maximum power. A scheduler may schedule terminals that have little or no power margin with bandwidth allocations that exclude resource blocks at the carrier band edge therefore reducing OBPD and reducing the likelihood of the terminal being power limited by the operational maximum power. In another scheduling scenario, the user terminal is scheduled with low path loss for all but the resource blocks at the band edge to mitigate the OBPD that would otherwise be required. The user terminal with high path loss would be scheduled for those band edge resource blocks because its OBPD would be less since the OBW is relatively small. It is possible to preserve frequency diversity for terminals assigned a smaller transmission bandwidth to minimize OBPD by using RB hopping over a longer scheduling time interval composed of several frames. Signaling overhead may be reduced by using pre-determined hopping patterns, or pre-defined logical physical permutations. A UE will determine the OBPD corresponding to its scheduled or allocated bandwidth size and location of the allocated bandwidth in the carrier band. The UE therefore computes an operational maximum power for every scheduled transmission to determine if the current power level will be limited.

In some embodiments, the schedulable wireless communication entity obtains maximum transmitter power information based on the radio resource assignment from reference information stored on the mobile terminal. For example, the maximum transmit power information may be obtained from a look-up table stored on the wireless terminal. Alternatively, the maximum transmit power information may be obtained in an over-the-air message. Several examples of the relationship between the radio resource assignment and the maximum transmit power adjustment are discussed more fully below. FIG. 4 illustrates exemplary OBPD de-rating values.

A BS may execute such scheduling decisions not simply from considerations of interference offered by a UE to frequency-adjacent BS's, but may also simultaneously optimize the performance of multiple UE's whose allocated resources are derived from a common set of carrier frequency resources (possibly extending over more than one carrier frequency). That is, the BS may optimize its scheduling allocations from consideration of the mutual interference offered between a multiplicity of UE's.

The power radiated into an adjacent frequency band by a UE, and the distortion offered by a UE to a BS receiver (or other UE receiver in the case of a TDD system) within the set of time-frequency resources allocated by the BS, is governed by several practical design criteria related to the implementation of mobile terminal transmitters, including oscillator phase noise, digital-analog converter noise, power amplifier (PA) linearity (in turn controlled by power amplifier mode, cost, power consumption etc.), among others.

Generally, however, and in common with most non-linear transformations expandable in terms a polynomial power series, UE power amplifiers give rise to undesired adjacent band interference in broad proportion, for a given PA design, to the mean power offered to the PA input. As a consequence of 3rd or 5th order polynomial terms, the frequency at which interference occurs is at 3 or 5 times the frequency of the input signal components, or harmonics thereof. Also, the power of such out-of-band components generally increases at 3 or 5 times the rate of increase of the input power level.

Accordingly, mobile terminals may control their out of band emission levels by limiting the power to the PA. Given a specific rated maximum output (or input) power level designed to achieve a given level of interference into an adjacent frequency band, or level of in-band distortion, a mobile terminal may elect to adjust, for example, reduce its input power level in order to reduce such unwanted effects. The mobile terminal may also keep its power at a given level, but adjust its operating point (load, bias, supply, etc.) to effect adjustment of the emission levels. As described elsewhere herein, a decision to increase or decrease the input or output PA power may be subject to other criteria, including waveform bandwidth, location in a frequency band, waveform quality metric, among others.

Generally, attributes of the waveform entering the power amplifier, along with attributes of network or UE operational parameters (such as the desired level of out of band emissions, in-band distortion, or other criteria described herein) are input to a controller which executes a pre-defined power adjustment function, or de-rating function $f(x1,x2,x3,...,xN)$ which relates the attributes $x1$ etc. to a maximum power level (where it is understood that de-rating may refer to a power level in excess, or less than, a nominal or rated maximum power level).

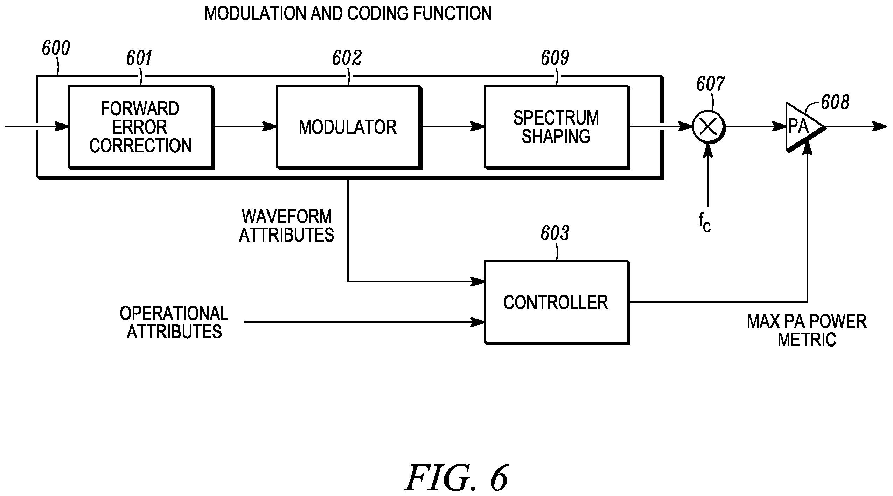

In FIG. 6, a modulation and coding function 600 accepts an information bit stream, such as higher layer protocol data units, and then applies techniques such as forward error correction 601, modulation 609, and linear and non-linear spectrum shaping 605 methods prior to frequency conversion 607 and input to a PA 608. A controller 603 may derive waveform attributes from the configuration of the modulation and coding function 600 or from direct observation of the signal immediately prior to frequency conversion 607. The controller 603 may also derive operational attributes from stored parameters or parameters signaled by the network. The controller 603 then uses the waveform attributes, which may include signal bandwidth, frequency location, among others, plus the operational attributes such as operational band, adjacent technology among others, to adjust the permitted maximum PA power value 605 which is offered as a control metric to the PA 608.

In one embodiment, the radio resource allocated to a schedulable wireless communication entity is based on a maximum power available to the schedulable wireless communication entity for the radio resource allocated along or in combination with other factors, for example, the interference impact. For a particular radio resource allocation, the scheduler knows the maximum transmit power of the corresponding schedulable wireless communication device. The scheduler may thus use this information to manage the scheduling of schedulable wireless communication entities, for example, to reduce interference.

In some embodiments, the scheduler determines a bandwidth size of the radio resource and allocates determined bandwidth to the schedulable wireless communications. The scheduler may also determine where within a carrier band the assigned radio resource is located. In one particular implementation, the scheduler allocates bandwidth nearer an edge of a carrier band when the schedulable wireless communication entity requires less transmit power, and the scheduler allocates bandwidth farther from the edge of the carrier band when the schedulable wireless communication entity requires more transmit power. These allocations of course may depend on the interference impact, for example, the proximity of neighboring carrier bands among other factors discussed herein. In another implementation, the scheduler allocates a radio resource to the schedulable wireless communications entity nearer an edge of a carrier band when a radio frequency distance between the schedulable wireless communication entity and the other wireless communications entity is larger, and the scheduler allocates the radio resource to the schedulable wireless communications entity farther from the edge of the carrier band when the radio frequency distance between the schedulable wireless communication entity and the other wireless communications entity is smaller.

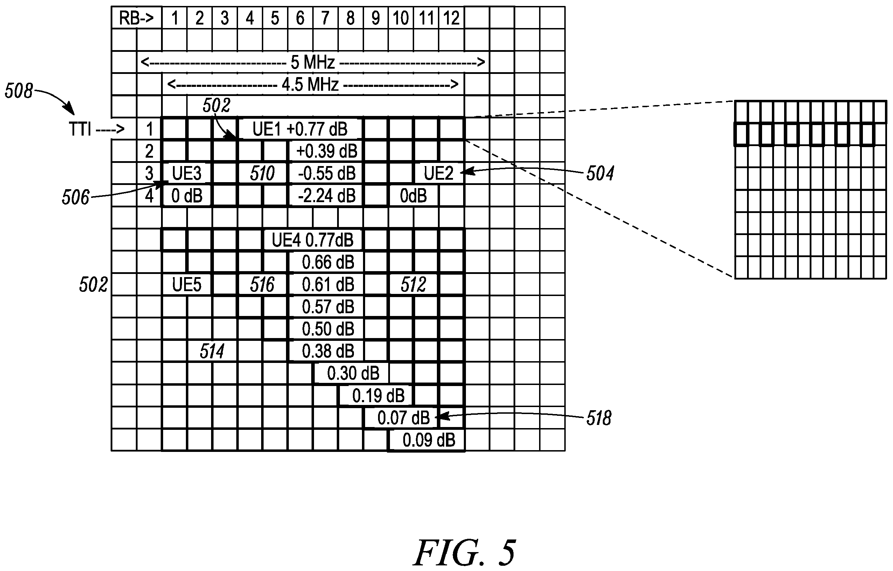

FIG. 5 illustrates, for successive transmission time intervals or TTI's (frames) 508, resource allocations to UE1 502 that are centered in the allocable band about DC and allocations for UE2 504 and UE3 506 located at each band edge. FIG. 5 shows a carrier band of 5 MHz with 4.5 MHz of allocable bandwidth in units of 375 kHz resource blocks (RB's) such that 12 RB's span the entire 4.5 MHz. Adjacent carriers are on either side of the 5 MHz carrier and are typically separated by a guard band. Out of band emissions decrease more rapidly when band edge occupancy is reduced or avoided. Therefore, reducing the size of band centered allocations as shown by UE1 502 means OBPD also decreases more rapidly 510. If, for example, two or more RB's at the band edge are not allocated then the OBPD may be less than 0. Out of band emissions (and OBPD 516) for allocations that include band edge RB's as shown for UE4 512 and UE5 514 decrease more slowly as the allocation is reduced compared to Band centered allocations. In the particular example shown, not until the occupancy of a resource allocation with band edge RB's 512 UE4 drops below 1/3 of the total allocable band does the OBPD drop below zero 518.

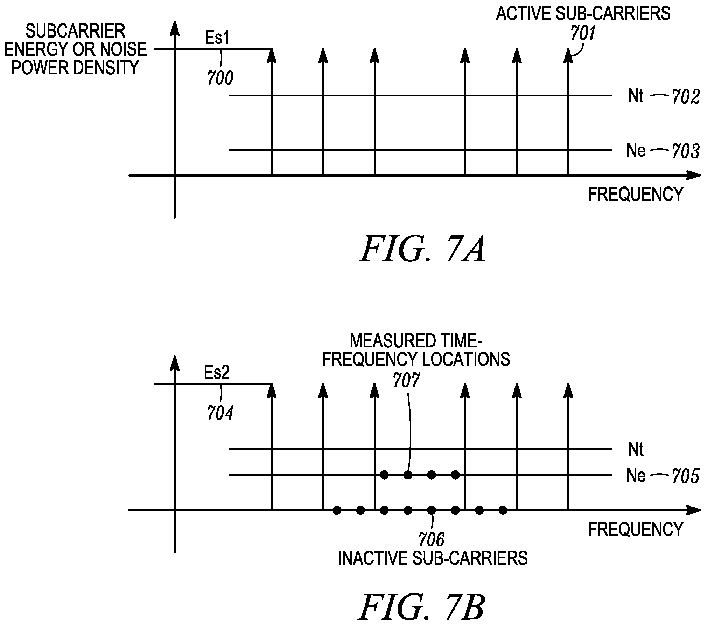

The BS may enhance its ability to optimally adjust the maximum permitted power level of UE's under the control of the BS by occasionally measuring the BS receiver noise power contribution arising from reduced transmitter waveform quality among UE's. FIG 7a illustrates this method in more detail in the context of OFD transmissions, or more generally transmissions comprising multiple sub-carriers. Specifically, a UE is shown transmitting on a set of active frequency sub-carriers 701 received at the BS receiver with a specific energy per sub-carrier Es1 700 and with an associated signal-noise ratio Es1/Nt with respect to the BS receiver thermal noise power density Nt 702.

In FIG. 7a, the waveform and hence frequency sub-carriers transmitted by the UE are also subject to impairments attributable to practical limitations of the UE transmitter. Although such impairments generally have frequency dependency, they may be regarded, to a first approximation, as a frequency-invariant additive noise power spectral density shown, at reception by the BS receiver, as a noise power density Ne 703. Generally, the UE transmitter performance is such that the received noise density Ne due to transmitter impairments is received at a level sufficiently below the BS receiver thermal noise density Nt so as to lead to a negligible increase in the effective total receiver noise density, i.e., Nt + Ne $\approx$ Nt.

In FIG. 7b, when operating under specific conditions, for example, when located at the edge of uplink cell coverage, it may be beneficial for the UE to adjust its maximum transmitter power level so as to increase the effective received energy per sub-carrier Es2 704. Due to the non-linear nature of the power amplifier, this may give rise to a proportionally larger (in dB) increase in the received noise density Ne 705 due to transmitter impairments, but if Ne remains at a level smaller than Nt, a net benefit in sub-carrier signal-noise ratio can accrue.

In order to permit the UE to optimize the ratio of Es/Ne at the transmitter, the BS may broadcast an indication of a) the BS receiver thermal noise density Nt, b) the received noise component Ne due to UE transmitter impairments, or c) a combination, sum, or some function of those measures. The UE may then optimize its maximum transmitter power level to optimize the sub-carrier signal-noise ratio or adjust the operating point as discussed above. For example, if the UE had available, from downlink power measurements, for example, an estimate of the path loss between the BS and UE, the UE may select the maximum radiated power level such that the received energy per sub-carrier and associated receiver noise power density Ne, due to transmitter impairments, is optimized. In support of this, the BS may elect to schedule specific time-frequency instances, or measurement opportunities, where a known set of sub-carriers 706 or other time-frequency resources are known to be absent. This permits the BS receiver to measure the desired noise power statistic (say, Nt + Ne) as shown in FIG. 7b.

The BS may also transmit to a specific UE (unicast), or broadcast over a specific cell or cells or over the entire network a specified measure of the ratio, measured at the UE PA output, between the energy per active sub-carrier Es, and the equivalent noise power density in inactive sub-carriers. A UE receiving such an indication, via a common or dedicated control channel, would then a) adjust their maximum power level or operating point such that the ratio Es/Ne is aligned with the specified broadcast or unicast value. Alternatively, the BS may also transmit an upper or lower bound on this ratio. Typically, the transmission on the control channel of such a measure would require quantization of the specified value or bound to an integer word of a number N of bits.

As suggested above, the TPD applied to the power amplifier is a function of OBPD and WPD. In one embodiment, relaxed emissions may be signaled by the base station to a specific UE or it may be transmitted on a broadcast control signal. The signaling may directly set the appropriate emissions level, or it may provide enough information for the UE to intelligently determine an appropriate emission level. The UE may respond by adjusting the PA supply voltage and/or adjusting the PA load line, both resulting in improved device efficiency. The appropriate emission level is the level at which all regulatory and system requirements, at the time of transmission, are met. The appropriate emission level will change from location to location, with regard to regulatory requirements from time to time and with regard to the distribution of other system users. Pertinent information about other users includes modulation type, modulation bandwidth, frequency offset, and transmit duration. Any of these properties can change quickly and often, for example, every 0.5ms.

In some joint-coding scenarios, each UE has knowledge of every other UE's parameters, for example, modulation, bandwidth, etc. In the invention, an algorithm uses the provided information and transmitter characteristics to adjust the transmitter so that interference is minimized. The algorithm generally uses implicit rules but may be directed by the BS to modify some of these rules and even add additional rules. This signaling permits a UE to autonomously relax waveform quality, for example, based on emissions requirements. This signaling may also allow the UE to adjust waveform quality during network access, for example, during Random Access Channel (RACH) access.

In some dedicated-coding scenarios, which are not covered by the invention, each UE only has knowledge of its own transmit parameters. Algorithms similar to the one described above are performed at the BS and relevant results are relayed to each UE. The BS may directly indicate that waveform quality may be reduced and by what amount. The UE must determine the appropriate adjustments based on unique transmitter characteristics to match levels determined by the BS. Use of emission reducing filters and parameters of those filters may be defined by the BS and may change some of the implicit rules for the transmitter adjustments.

In one embodiment, a schedulable wireless communication entity varies its spectral emissions level based on a radio resource assignment. The spectral emissions level may also be varied based on radio resource assignments of other wireless communication entities operating within the same wireless communication network, or based on its interference impact with other entities, or based on the output power of the wireless communication entity. In other embodiments, the spectral emissions level of the wireless communication entity is varied based on distance to an adjacent carrier frequency, or based on a frequency band allocated to the wireless communication entity. The spectral emissions level may also be varied in accordance with adjacent frequency bands, or in accordance with a wireless communication technology deployed in a frequency band adjacent to a frequency band including the radio resource allocated to the wireless communication entity, according to a protocol state governing the schedulable wireless communication entity, according to the power headroom of the wireless communication entity, according to an indicated noise metric broadcast by the network, or according to a metric broadcast by network describing a bounding ratio of a mean power level of occupied sub-carriers to a mean power level of unoccupied sub-carriers. The spectral emissions level may also be varied based on combinations to the examples above.

As suggested, the spectral emissions level may be varied by de-rating the maximum transmit power of the wireless communication entity, for example, to align output power of the wireless communication entity with the spectral emissions level. The spectral emissions level may also be varied by re-rating the maximum transmit power of the wireless communication entity to align the output power of the wireless communication entity with the spectral emissions level.

A BS may monitor per-UE, or collectively, the loss of intra-cell orthogonality by assessing uplink interference with respect to the BS thermal noise level. The BS may intentionally not schedule UL transmissions (optionally using a pre-defined pattern) for such measurements. The noise measurement can be used to determine the optimal combination of sub-channel power and adjacent-sub-channel power for each user. The UE may use scheduled gaps in the downlink, or a second receiver, to identify the frequency offset of, and path loss to, an uncoordinated neighbor cell and technology (possibly augmented by location information) and then adapt waveform quality. The waveform quality may be specified via network signaling on a cell or area specific basis, based on local BS density, cell plan, re-use factor, spectrum regulations, proximity of carrier to allocation band edge, frequency-adjacent technologies, local terrain.

While the present disclosure and the best modes thereof have been described in a manner establishing possession and enabling those of ordinary skill to make and use the same, it will be understood and appreciated that there are equivalents to the exemplary embodiments disclosed herein and that modifications and variations may be made thereto without departing from the scope of the invention as defined by the appended claims.

## Claims

1. A method in schedulable wireless communication entity (102, 200, 306) that communicates in a wireless communication network, method comprising:

   receiving a radio resource assignment;
   obtaining knowledge of transmitter parameters of other wireless communication entities (102, 200, 308) in the wireless communication network;
   varying the spectral emissions level of the wireless communication entity (102, 200, 306) based on the radio resource assignment received and based on the transmitter parameters of the other wireless communication entities (102, 200, 308) in the wireless communication network.

2. The method of Claim 1,
   wherein varying the spectral emissions level of the wireless communication entity (102, 200, 306) comprises adjusting an operating point of a power amplifier (608) of the wireless communication entity at a given power level.

3. The method of Claim 1,
   wherein when the schedulable wireless communication entity (102, 200. 306) requires less transmit power, bandwidth nearer an edge of a carrier band is allocated to the schedulable wireless communication entity and when the schedulable wireless communication entity requires more transmit power, bandwidth farther from the edge of the carrier band is allocated to the schedulable wireless communication entity.

4. A wireless communication entity (102. 200. 306) schedulable in a wireless communication network, comprising:

   a radio receiver, the radio receiver capable of receiving a radio resource assignment information;
   a power amplifier (608);
   a controller (603) communicably coupled to the power amplifier (608),
   the controller (603) configured to:

   obtain knowledge of transmitter parameters of other wireless communication entities (102, 200. 308) in the wireless communication network;
   vary a spectral emissions level of the power amplifier (608) based on radio resource assignment information received by the radio receiver and based on the transmitter parameters of the other wireless communication entities (102, 200, 308) in the wireless communication network.

5. The entity of Claim 4, wherein the controller is configured to vary the spectral emissions level of the wireless communication entity (102, 200. 306) by adjusting an operating point of a power amplifier (608) of the wireless communication entity at a given power level.

6. The entity of Claim 4, wherein when the wireless communication entity (102, 200, 306) requires less transmit power, bandwidth nearer an edge of a carrier band is allocated to the wireless communication entity and when the wireless communication entity requires more transmit power, bandwidth farther from the edge of the carrier band is allocated to the wireless communication entity.

7. The method of Claim 1 or the entity of Claim 4, wherein the transmitter parameters include one or more of modulation type, bandwidth, frequency offset or transmit duration.

**Patentansprüche**

1. Verfahren in einer zeitlich planbaren drahtlosen Kommunikationseinheit (102, 200, 306), die in einem drahtlosen Kommunikationsnetzwerk kommuniziert, wobei das Verfahren umfasst:

Empfangen einer Funkressourcenzuweisung;
Erhalten von Wissen über Transmitterparameter von anderen drahtlosen Kommunikationseinheiten (102, 200, 308) in dem drahtlosen Kommunikationsnetzwerk;
Variieren der spektralen Emissionspegel der drahtlosen Kommunikationseinheit (102, 200, 306) basierend auf der empfangenen Funkressourcenzuweisung und basierend auf den Transmitterparametern der anderen drahtlosen Kommunikationseinheiten (102, 200, 308) in dem drahtlosen Kommunikationsnetzwerk.

2. Verfahren nach Anspruch 1, wobei das Variieren der spektralen Emissionspegel der drahtlosen Kommunikationseinheit (102, 200, 306) ein Einstellen eines Arbeitspunkts eines Leistungsverstärkers (608) der drahtlosen Kommunikationseinheit bei einem gegebenen Leistungspegel umfasst.

3. Verfahren nach Anspruch 1, wobei dann, wenn die zeitlich planbare drahtlose Kommunikationseinheit (102, 200, 306) weniger Übertragungsleistung benötigt, Bandbreite näher an einem Rand eines Trägerbands zu der zeitlich planbaren drahtlosen Kommunikationseinheit zugewiesen wird, und dann, wenn die zeitlich planbare drahtlose Kommunikationseinheit mehr Übertragungsleistung benötigt, Bandbreite weiter weg von dem Rand des Trägerbands der zeitlich planbaren drahtlosen Kommunikationseinheit zugewiesen wird.

4. Drahtlose Kommunikationseinheit (102, 200, 306), die zeitlich planbar in einem drahtlosen Kommunikationsnetzwerk ist, umfassend:

einen Funkempfänger, wobei der Funkempfänger dazu ausgelegt ist, eine Funkressourcenzuweisungsinformation zu empfangen;
einen Leistungsverstärker (608);
einen Controller (603), der kommunizierend mit dem Leistungsverstärker (608) gekoppelt ist,
wobei der Controller (603) zu Folgendem ausgelegt ist:

Erhalten von Wissen über Transmitterparameter von anderen drahtlosen Kommunikationseinheiten (102, 200, 308) in dem drahtlosen Kommunikationsnetzwerk;
Variieren eines spektralen Emissionspegels des Leistungsverstärkers (608) basierend auf Funkressourcenzuweisungsinformation, die durch den Funkempfänger empfangen ist, und basierend auf den Transmitterparametern der anderen drahtlosen Kommunikationseinheiten (102, 200, 308) in dem drahtlosen Kommunikationsnetzwerk.

5. Einheit nach Anspruch 4, wobei der Controller dazu ausgelegt ist, die spektralen Emissionspegel der drahtlosen Kommunikationseinheit (102, 200, 306) zu variieren durch Anpassen eines Arbeitspunkts eines Leistungsverstärkers (608) der drahtlosen Kommunikationseinheit auf einem gegebenen Leistungspegel.

6. Einheit nach Anspruch 4, wobei dann, wenn die drahtlose Kommunikationseinheit (102, 200, 306) weniger Übertragungsleistung benötigt, Bandbreite näher an einem Rand eines Trägerbands zu der drahtlosen Kommunikationseinheit zugewiesen wird, und dann, wenn die drahtlose Kommunikationseinheit mehr Übertragungsleistung benötigt, Bandbreite weiter weg von dem Rand des Trägerbands der drahtlosen Kommunikationseinheit zugewiesen wird.

7. Verfahren nach Anspruch 1 oder Einheit nach Anspruch 4, wobei die Transmitterparameter einen Modulationstyp, eine Bandbreite, einen Frequenzversatz und/oder eine Übertragungsdauer umfassen.

**Revendications**

1. Procédé dans une entité de communication sans fil programmable (102, 200, 306) qui communique dans un réseau de communication sans fil, le procédé comprenant :

   la réception d'une attribution de ressource radio ;
   l'obtention d'informations sur les paramètres d'émetteur d'autres entités de communication sans fil (102, 200, 308) dans le réseau de communication sans fil ;
   la variation du niveau d'émission spectrale de l'entité de communication sans fil (102, 200, 306) en fonction de l'affectation de ressource radio reçue et en fonction des paramètres de l'émetteur des autres entités de communication sans fil (102, 200, 308) dans le réseau de communication sans fil.

2. Procédé selon la revendication 1,
   dans lequel la variation du niveau d'émission spectrale de l'entité de communication sans fil (102, 200, 306) comprend le réglage d'un point de fonctionnement d'un amplificateur de puissance (608) de l'entité de communication sans fil à un niveau de puissance donné.

3. Procédé selon la revendication 1,
   dans lequel, lorsque l'entité de communication sans fil programmable (102, 200, 306) nécessite moins de puissance d'émission, une bande passante plus proche d'un bord d'une bande porteuse est allouée à l'entité de communication sans fil programmable et lorsque l'entité de communication sans fil programmable nécessite davantage de puissance de transmission, une bande passante plus éloignée du bord de la bande porteuse est attribuée à l'entité de communication sans fil programmable.

4. Entité de communication sans fil (102, 200, 306) pouvant être programmée dans un réseau de communication sans fil, comprenant :

   un récepteur radio, le récepteur radio pouvant recevoir une information d'attribution de ressource radio ;
   un amplificateur de puissance (608) ;
   un dispositif de commande (603) couplé de manière communicante à l'amplificateur de puissance (608),
   le dispositif de commande (603) configuré pour :

      obtenir des informations des paramètres d'émetteur d'autres entités de communication sans fil (102, 200, 308) dans le réseau de communication sans fil ;
      faire varier un niveau d'émissions spectrales de l'amplificateur de puissance (608) en fonction des informations d'attribution de ressources radio reçues par le récepteur radio et en fonction des paramètres d'émetteur des autres entités de communication sans fil (102, 200, 308) du réseau de communication sans fil.

5. Entité selon la revendication 4, dans laquelle le dispositif de commande est configuré pour faire varier le niveau d'émissions spectrales de l'entité de communication sans fil (102, 200, 306) par le réglage d'un point de fonctionnement d'un amplificateur de puissance (608) de l'entité de communication sans fil à un niveau de puissance donnée.

6. Entité selon la revendication 4, dans laquelle, lorsque l'entité de communication sans fil (102, 200, 306) nécessite moins de puissance de transmission, une largeur de bande proche d'un bord d'une bande porteuse est allouée à l'entité de communication sans fil et lorsque l'entité de communication sans fil nécessite plus de puissance de transmission, une bande passante plus éloignée du bord de la bande porteuse est allouée à l'entité de communication sans fil.

7. Procédé selon la revendication 1 ou entité selon la revendication 4, dans lequel les paramètres d'émetteur comprennent un ou plusieurs éléments parmi un type de modulation, une largeur de bande, un décalage de fréquence ou une durée d'émission.

**FIG. 1**

_200_

230 — RADIO Rx / Tx

210 — PROCESSOR | UI — 240

220 — MEMORY

*FIG. 2*

**FIG. 3**

| FRACTIONAL BWO RELATIVE TO 4.5 MHz | | | | | | | | | | | | |
|---|---|---|---|---|---|---|---|---|---|---|---|---|
| 1/12 | 2/12 | 3/12 | 4/12 | 5/12 | 6/12 | 7/12 | 8/12 | 9/12 | 10/12 | 11/12 | 1 | COMMENT |
| - | NA | - | NA | - | -2.24 | - | -0.55 | - | 0.39 | - | 0.77 | DC CENTERED |
| -0.71 | -0.32 | -0.09 | 0.07 | 0.19 | 0.30 | 0.38 | 0.50 | 0.57 | 0.61 | 0.66 | 0.77 | BAND EDGE |

**FIG. 4**

EP 2 050 200 B1

FIG. 5

*FIG. 6*

ACTIVE SUB-CARRIERS
*701*

SUBCARRIER
ENERGY OR NOISE
POWER DENSITY

Es1

*700*

Nt — *702*

Ne — *703*

FREQUENCY

*FIG. 7A*

MEASURED TIME-
FREQUENCY LOCATIONS
*707*

Es2

*704*

Nt

Ne — *705*

*706*
INACTIVE SUB-CARRIERS

FREQUENCY

*FIG. 7B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005018114 A
- US 2004109424 A
- US 6751444 B